Europäisches Patentamt

European Patent Office

Office européen des brevets

(19)

(11) Veröffentlichungsnummer: **0 031 867**
**B2**

(12) **NEUE EUROPÄISCHE PATENTSCHRIFT**

(45) Veröffentlichungstag der neuen Patentschrift:
01.04.87

(51) Int. Cl.⁴: **F 16 H 57/02**

(21) Anmeldenummer: 80102841.6

(22) Anmeldetag: 22.05.80

(54) Getriebegehäuse für Elektrowerkzeuge.

(30) Priorität: 08.01.80 DE 3000452

(43) Veröffentlichungstag der Anmeldung:
15.07.81 Patentblatt 81/28

(45) Bekanntmachung des Hinweises auf die Patenterteilung:
12.10.83 Patentblatt 83/41

(45) Bekanntmachung des Hinweises auf die Entscheidung
über den Einspruch:
01.04.87 Patentblatt 87/14

(84) Benannte Vertragsstaaten:
CH DE GB LI NL

(56) Entgegenhaltungen:
BE - A - 878 370
DE - A - 1 908 656
DE - B - 1 176 959
DE - B - 1 276 801
DE - U - 1 910 597
GB - A - 578 755

Informationsschrift FEIN über die Baureihe S 636 vom
April 1964

(73) Patentinhaber: Licentia Patent-Verwaltungs-GmbH,
Theodor-Stern-Kai 1, D-6000 Frankfurt/Main 70 (DE)

(72) Erfinder: Hoyer, Rudolf, Ing. grad., Im Kugelhof 34,
D-7154 Althütte (DE)
Erfinder: Geis, Wilhelm, Ing. grad., Mühlefeldstrasse 8,
D-7057 Leutenbach (DE)

(74) Vertreter: Wolf, Otto, Dr. Ing. et al, Licentia
Patent-Verwaltungs-GmbH Theodor-Stern-Kai 1,
D-6000 Frankfurt 70 (DE)

## Beschreibung

Die Getriebegehäuse von Elektrowerkzeugen bestehen im allgemeinen entweder aus einem metallischen Werkstoff oder aus einem geeigneten Kunststoff, wobei Kunststoffgehäuse vor allem in Verbindung mit vollisolierten Elektrowerkzeugen Anwendung finden.

Bekannt sind auch schon Elektrowerkzeuge mit einem metallischen, teilweise von einer Kunststoffhülle umgebenen Getriebegehäuse. Die Kunststoffhülle wird dabei mittels einer koaxial zur Werkzeugspindel liegenden Schraubkappe gegen den motorseitigen Flansch gepresst und dadurch gehalten. Da Teile des metallischen Getriebegehäuses von aussen berührbar bleiben, kann mit einer solchen partiellen Kunststoffhülle keine Vollisolation erreicht werden. Dies ist bei diesen bekannten Elektrowerkzeugen auch nicht beabsichtigt. Aus Gründen der elektrischen Sicherheit ist hier vielmehr eine besondere Anschlussschraube für den Anschluss einer separaten Erdleitung vorgesehen (GB-A 587 755).

Bei mit einem elektrischen Antriebsmotor ausgerüsteten Handbohrmaschinen ist man schon dazu übergegangen, den Stator des Motors unter Anordnung einer aus Kunststoff bestehenden Zwischenlage in einem metallischen Motorgehäuse zu halten, wobei das Motorgehäuse zur Fixierung der Zwischenlage Durchbrüche zum formschlüssigen Eingriff von Teilen der Zwischenlage aufweist.

Das metallische Motorgehäuse ist dabei in das Gehäuse der Handbohrmaschine eingesetzt (BE-A 878 370).

Durch das DE-GM 1 910 597 ist ein schutzisoliertes Elektrowerkzeug bekannt, dessen aus Isolierstoff bestehendes Motorgehäuse innerhalb eines hülsenförmigen Metallgehäuses angeordnet ist. Das Metallgehäuse ist dabei mit Aussparungen versehen, deren Querschnitt sich gegen das Isoliergehäuse hin verjüngt und die sich beim Aufbringen des Isolierstoffgehäuses mit diesem füllen.

In der Informationsschrift Fein über die Baureihe S 636 vom April 1964 ist ein Motorgehäuse dargestellt und beschrieben, das zum Teil aus Aluminium besteht und aussen mit einem Kunststoffmantel versehen ist.

Abweichend von Motorgehäusen der im vorstehenden angegebenen Ausführungsformen befasst sich die Erfindung mit einem metallischen, vollisolierten Getriebegehäuse für Elektrowerkzeuge.

Dementsprechend ist es Aufgabe der Erfindung, im Rahmen der Vollisolation eines Elektrowerkzeugs ein Getriebegehäuse zu schaffen, das einerseits nach aussen vollisoliert ist und andererseits mechanisch stabiler ist als ein Kunststoffgehäuse und das ferner eine bessere Wärmeabfuhr als ein solches Gehäuse gewährleistet.

Diese Aufgabe ist erfindungsgemäss dadurch gelöst, dass die Gehäusewandung aussen mit Vertiefungen oder dergleichen Ausnehmungen zur Verankerung des durch Spritzen aufgebrachten isolierenden Kunststoffmantels versehen ist, dass das Gehäuse im Bereich seiner Stirnseiten Ein- bzw. Ausdrehungen aufweist, die ebenfalls zur Verankerung des Kunststoffmantels vorgesehen sind, und dass der Gehäuseinnenraum Stützleisten zur Aufnahme des beim Umspritzen des Gehäuses auftretenden Spritzdrucks enthält.

Der Gegenstand der Erfindung wird im nachstehenden anhand der Zeichnung, die ein Ausführungsbeispiel schematisch veranschaulicht, erläutert. Es zeigen:

Fig. 1 ein Getriebegehäuse in Seitenansicht,
Fig. 2 das Getriebegehäuse nach Fig. 1 im Schnitt,
Fig. 3 eine Ansicht des Getriebegehäuses gemäss Fig. 1 in Richtung A,
Fig. 4 eine Ansicht entsprechend Fig. 2, jedoch mit durch Spritzen aufgebrachtem Kunststoffmantel.

Wie aus den Figuren ersichtlich ist, enthält das Getriebegehäuse 1 in Umfangsrichtung verteilt angebrachte Ausnehmungen 2, von denen beim Ausführungsbeispiel sieben vorgesehen sind, deren Kontur schwalbenschwanzförmig ist. Im Hals 3 des Getriebegehäuses sind vier Vertiefungen 4 angebracht, die um 90° gegeneinander versetzt sind.

Das Getriebegehäuse weist ferner im Bereich seiner beiden Stirnseiten Andrehungen 5, 6 auf, die Ausnehmungen 2, die Vertiefungen 4 und die Andrehungen 5 und 6 gewährleisten einen guten und sicheren Halt der um das Gehäuse herumgespritzten Kunststoffschicht 7 (siehe Fig. 4).

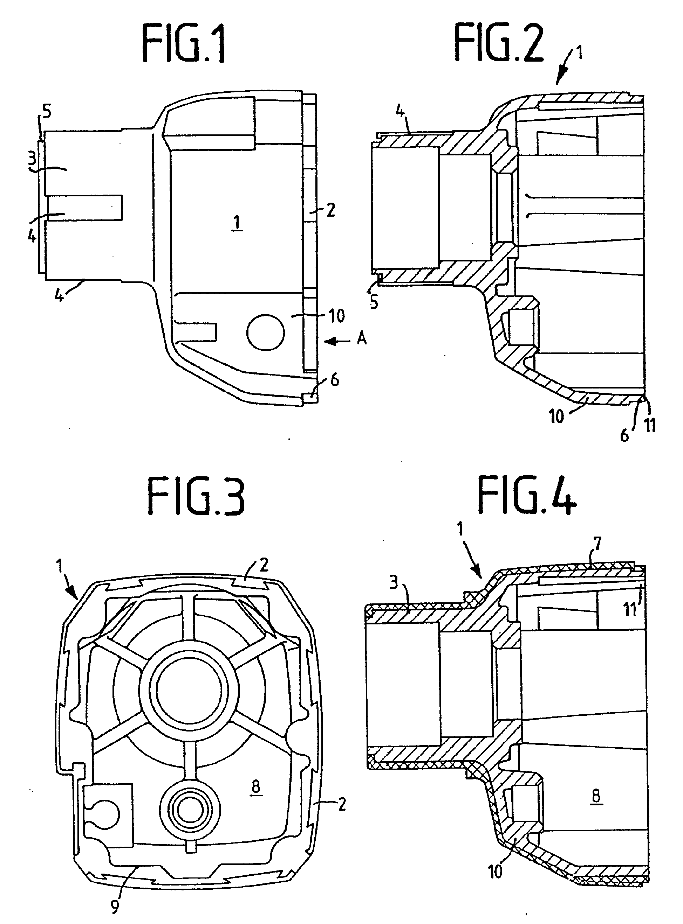

Um unerwünschte Deformationen des Getriebegehäuses zu vermeiden, ist dieses, wie besonders aus Fig. 3 hervorgeht, im Bereich seines Innenraums 8 mit Stützleisten 9 versehen. Diese Leisten nehmen den beim Umspritzen des Gehäuses auftretenden Spritzdruck auf.

Der Hals 3 des Getriebegehäuses kann dabei ganz oder teilweise mit einem Kunststoff umspritzt bzw. ummantelt sein, desgleichen das sich an den Hals 3 anschliessende restliche Gehäuseteil 10.

Nach einem weiteren Gedanken der Erfindung kann das Gehäuseteil 8 auch durch ein Metallgerippe verkörpert sein. In diesem Fall sind die Ausnehmungen 2 in den das Gerippe bildenden Stegen vorgesehen. Das Metallgerippe wird dabei bis auf den stirnseitigen Anschlussflansch 11 vollständig umspritzt (Fig. 2 und 4).

## Patentansprüche

1. Getriebegehäuse für Elektrowerkzeuge, welches aus einem metallischen Werkstoff besteht und dessen Gehäusewandung mit einem isolierenden Kunststoffmantel umgeben ist, dadurch gekennzeichnet, dass die Gehäusewandung aussen mit Vertiefungen oder dergleichen Ausnehmungen (2, 4) zur Verankerung des durch Spritzen aufgebrachten isolierenden Kunststoffmantels (7) versehen ist, dass das Gehäuse im Bereich seiner Stirnseiten Ein- bzw. Ausdrehungen (5, 6) aufweist, die ebenfalls zur Verankerung des Kunststoffmantels (7) vorgesehen sind, und dass der Gehäuseinnenraum Stützleisten (9) zur Aufnahme des beim Umspritzen des Gehäuses auftretenden Spritzdrucks enthält.

2. Getriebegehäuse nach Anspruch 1, dadurch gekennzeichnet, dass der Hals (3) des Getriebegehäuses vollständig mit einem Kunststoff ummantelt ist und das restliche Gehäuseteil (10) durch ein Metallgerippe verkörpert ist, das bis auf den stirnseitigen Anschlussflansch (11) vollständig mit einem Kunststoff umspritzt ist.

## Claims

1. Gear casing for electric tools which consists of a metallic material and comprises a casing wall which is surrounded by an insulating plastic coating, characterized in that hollows or like recesses (2, 4) are provided on the exterior of the casing wall to anchor the insulating plastic coating (7) which is applied by injection moulding, that the casing comprises in the area of its face grooves (5, 6) which have been formed by turning and likewise serve to anchor the plastic coating (7) and that the casing interior comprises supporting bars (9) for absorbing the injection pressure which occurs when the casing is subjected to injection moulding.

2. Gear casing as defined in claim 1, characterized in that the neck (3) of the gear casing is completely coated with a plastic material and the remaining casting section (10) is embodied by a metal frame which is completely covered with a plastic material by means of injection moulding, with the exception of the adjoining flange (11) on the face.

## Revendications

1. Carter d'engrenages métallique pour outils électriques portatifs, enrobé de matière synthétique isolante, caractérisé par le fait que sa paroi extérieure comporte plusieurs cavités ou gorges (2, 4) destinées à l'immobilisation de l'enveloppe synthétique isolante (7) qui est appliquée sur cette paroi par le procédé du moulage par injection, que le carter présente, au voisinage de ses faces de bout, des épaulements (5,6) réalisés au tour et servant également à immobiliser l'enveloppe synthétique isolante (7) et qu'il est doté intérieurement de nervures de renforcement (9) dont le rôle est de supporter la pression d'injection qui se développe lors du moulage de la matière sur le carter.

2. Carter d'engrenages selon la revendication 1, caractérisé par le fait que son col (3) est complètement enrobé de matière synthétique, le reste du carter (10) étant constitué par une carcasse métallique, elle-même complètement enveloppée de matière plastique moulée par injection à l'exclusion de la bride de montagne (11) se trouvant sur la face de bout.

# FIG.1

# FIG.2

# FIG.3

# FIG.4